# EUROPEAN PATENT APPLICATION

(11) **EP 1 672 549 A1**
(43) Date of publication of application: **21.06.2006**
(21) Application number: 04293050.3
(22) Date of filing: 20.12.2004
(51) Int. Cl.: G06F 17/50, G06F 17/30

(54) **Product edition and simulation database system with user interaction graphical tool**

(71) Applicant: Dassault Systèmes, 92156 Suresnes Cedex (FR)
(72) Inventor: Charles, Bernard, 78810 Feucherolles (FR); Nonclercq, Arnaud, 92150 Suresnes (FR); Perroux, François, 92370 Chaville (FR)
(74) Representative: Hirsch & Associés

(57) **Abstract**

The invention is directed to a product edition and simulation system, comprising a storage system having data related to modeled object. The product edition and simulation system has a graphical user interface, having an edition workbench comprising a plurality of software tools suitable for editing a subset of features of the modeled objects. The edition workbench is adapted for displaying a user-interactive graphical tool in the graphical user interface. The graphical tool is adapted for triggering, upon user action, a simulation of a modeled object according to a feature not comprised in the subset, the simulation using a result of a query in the storage system.

## Description

The invention relates to the field of computer programs and systems, and more specifically to a product lifecycle management database system, which comprises a database of data representative of modeled objects.

Computer-aided techniques include Computer-Aided Design or CAD, which relates to software solutions for authoring product design. Similarly, CAE is an acronym for Computer-Aided Engineering, e.g. it relates to software solutions for simulating the physical behavior of a future product. CAM stands for Computer-Aided Manufacturing and typically includes software solutions for defining manufacturing processes and operations.

A number of systems and programs are offered on the market for the design of parts or assemblies of parts, forming a product, such as the one provided by Dassault Systemes under the trademark CATIA. These CAD systems allow a user to construct and manipulate complex three dimensional (3D) models of objects or assemblies of objects. CAD systems thus provide a representation of modeled objects using edges or lines, in certain cases with faces. Lines or edges may be represented in various manners, e.g. non-uniform rational B-splines (NURBS). These CAD systems manage parts or assemblies of parts as modeled objects, which are essentially specifications of geometry. Specifically, CAD files contain specifications, from which geometry is generated, which in turn allow for a representation to be generated. Specifications, geometry and representation may be stored in a single CAD file or multiple ones. CAD systems include graphic tools for representing the modeled objects to the designers; these tools are dedicated to the display of complex objects - the typical size of a file representing an object in a CAD system being in the range of one Megabyte per part, and an assembly may comprise thousands of parts. A CAD system manages models of objects, which are stored in electronic files.

In computer-aided techniques, the graphical user interface (GUI) plays an important role as regards the efficiency of the technique.

Also known are Product Lifecycle Management (PLM) solutions, which refer to a business strategy that helps companies to share product data, apply common processes, and leverage corporate knowledge for the development of products from conception to the end of their life, across the concept of extended enterprise. By including the actors (company departments, business partners, suppliers, Original Equipment Manufacturers (OEM), and customers), PLM may allow this network to operate as a single entity to conceptualize, design, build, and support products and processes.

Some PLM solutions make it for instance possible to design and develop products by creating digital mockups (a 3D graphical model of a product). For instance, the digital product may be first defined and simulated using an appropriate application. Then, the lean digital manufacturing processes may be defined and modeled.

The PLM solution provided by Dassault Systemes (under the trademarks CATIA, ENOVIA and DELMIA) provides an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service. Such PLM solutions comprise a relational database of products. The database comprises a set of textual data and relations between the data. Data typically include technical data related to the products said data being ordered in a hierarchy of data and are indexed to be searchable. The data are representative of the modeled objects, which are often modeled products and processes.

Product lifecycle information, including product configuration, process knowledge and resources information are typically intended to be edited in a collaborative way.

To this respect, a collaborative workspace can be defined as an interconnected environment in which participants in the product lifecycle (design and also marketing, sales, manufacturing, OEMs, suppliers, and customers) can access and interact with each other's "In-Work" designs, thereby enhancing communication through exchange, direct use, simulation and validation in 3D.

Product data management (PDM) systems refer to tools used to control access to and manage all product definition data, including the manufacturing processes. This is achieved by maintaining product information (or meta-data).

A PDM solution, such as the one sold under the name ENOVIA, may automatically capture and manage product information and facilitates collaboration throughout the enterprise and across the value chain.

It may further integrate people and processes by automating and tracking standard workflows within an organization and its supply chain, driving efficiency and accountability, and facilitating standards compliance.

For example, the user may wish to know where a product, e.g. a braking pedal, is also used, that is, in which other models it is embedded. A standard CAD tools enable a user to navigate between parts or products mainly according to the "is composed of" relation. Databases used in PDM systems enable queries to be made on various types of relation between parts or product and the scope of navigation of the databases is the widest possible. In practice, the user can have access to all the parts, products or assemblies.

Nevertheless, databases do usually not allow the user to easily navigate since the data do not have a graphical representation. Data are identified by file names or types and those names may not be relevant enough to identify precisely the items that the user is looking for.

For the sake of completeness, a database is defined usually as a collection of data or information organized for rapid search and retrieval, especially by a computer. Databases are structured to facilitate storage, retrieval, modification, and deletion of data in conjunction with various data-processing operations. A database consists of a file or set of files that can be broken down into records, each of which consists of one or more fields. Fields are the basic units of data storage. Users retrieve database information primarily through queries. Using keywords and sorting commands, users can rapidly search, rearrange, group, and select the field in many records to retrieve or create reports on particular aggregates of data according to the rules of the database management system being used.

During the various routine steps of design, a user may have to perform various simulations in order to check the consistency of his work. For example, the user can simulate:
- the kinematics operation of a designed object,
- the assembly of various parts (to check the fitting or clash of said parts),
- some manufacturing steps of a process,
- the various configurations or design iterations of one or more parts,
- the constraint analysis, etc.

Said simulations can be carried out on various modeled objects. Modeled objects can be products, product parts or assemblies of parts that a user whishes to edit or browse, resources such as a robot in a cell, process comprising several steps such as a manufacturing process.

With the known solutions, a designer who wishes for instance to launch a simulation of a modeled object has to save the corresponding data files, quit a current application window (by minimizing said window for example), launch a new application window for carrying out the desired type of simulation and, if necessary, launch another application for carrying out another type of simulation. Depending on the nature of the simulation to be performed, the user has to navigate among several applications or sets of software tools (e.g. workbenches of software tools) within one application. Once the simulation has been performed, the user has to go back to the edition workbench or application for further work on the modeled object, possibly making profitable the results of the simulation. Given the increasing importance of simulations in the field of design, one understands that such steps are both time and resource consuming; they are further likely to cause errors. In addition, the user has to be skilled in the handling of all the various simulation applications, preventing him from focusing on his own work.

There is therefore a need for a better optimized product edition and simulation system with respect to design methods, for example circumventing the above undesired steps when triggering of a simulation is desired.

To this aim, the invention proposes a product edition and simulation system, comprising: a storage system having data related to modeled objects; a graphical user interface, having an edition workbench comprising a plurality of software tools suitable for editing a subset of features of the modeled objects; wherein: the edition workbench is adapted for displaying a user-interactive graphical tool in the graphical user interface, the graphical tool being adapted for triggering upon user action a simulation of a modeled object according to a feature not comprised in the subset, the simulation using a result of a query in the storage system.

In other embodiments, the invention may comprise one or more of the following features:
- the graphical tool is adapted, upon user action, for triggering a simulation of the modeled object before updating the storage system with the modeled object;
- the user-interactive graphical tool is adapted for triggering a simulation of the operation of the modeled object;
- the user-interactive graphical tool is adapted for triggering a simulation of the modeled object according to product lifecycle features;
- the product lifecycle features comprise the design iterations and the maturity level of the modeled object;
- the user-interactive graphical tool is adapted for triggering a simulation of the modeled object, according to configuration features;
- the user-interactive graphical tool is adapted for triggering a simulation of the modeled object, according to electrical, chemical or physical properties;
- the product edition and simulation system of the invention further comprises a network of computers, the network of computers and storage system being configured so as to allow users for co-editing modeled objects from any one of the computers;
- modeled objects comprise products, product parts, assemblies, resources, processes;
- the modeled object is a product and wherein the user-interactive graphical tool is adapted for triggering a simulation of the synchronization status of the edited product comprising a first product part edited by a first user and a second product part edited by a second user;
- the user-interactive graphical tool is adapted for displaying, upon user action, attributes of a modeled object contained in the storage system;
- the user-interactive graphical tool is adapted for displaying a representation of one or more objects with respective attributes according to a color code;
- the attributes of the object relate to a lock/unlock status;
- the lock/unlock status comprise lock/unlock status of a reference of the object, lock/unlock status of an instance of the object and/or lock/unlock status of a three dimensional representation of the object;
- the user-interactive graphical tool is adapted, upon user action, for displaying the modification status of an object;
- displaying the modification status comprises, one or more of the followings: identification of objects modified by the user in a current session of the user; identification of objects able to be modified by the user; identification of objects that cannot be modified by the user in the current session;
- the user-interactive graphical tool is adapted for displaying, upon action of a user, representation of one or more of the followings: representation of a name of an object, the name belonging to the attributes of the object; representation of a maturity level of an object according to criteria comprised in the attributes of the object; representation of a version identifier of an object, the version identifier belonging to the attributes of the object; representation of an effectivity identifier of an object, the effectivity identifier belonging to the attributes of the object;
- the user-interactive graphical tool is adapted for displaying, upon action of a user, representation of the status of the links pointing at and pointing from parts of an object;
- the status of the links comprises an update/non-update status;
- said user-interactive graphical tool is a drag or drag-and-drop tool; and the graphical tool is adapted for both selecting a specific object and displaying the attributes of this object upon dragging and dropping the graphical tool up to a location corresponding to this object;
- the graphical tool is adapted for triggering a simulation of an object upon first selecting the object and then an interactive area of the graphical tool responsive to user selection;
- the graphical tool is adapted for displaying the attributes of an object upon first selecting the object and then an interactive area of the graphical tool responsive to user selection;
- selection of an attribute modifies the feature not comprised in the subset; and
- the graphical tool is adapted for displaying, upon user selection, an endless scroll bar
suitable for simulation control.

Various embodiments of the invention are now discussed, in reference to the drawings, in which:
- FIG. 1 is an exemplified display of a graphical user interface showing a graphical tool of a product edition and simulation system such as PLM database system, according to an embodiment of the invention;
- FIG. 2 exhibits a display of the graphical tool of FIG. 1;
- FIG. 3 illustrates schematically an example of a toggle operation of a user-interactive simulation area of the graphical tool of FIG. 2;
- FIG. 4 shows an exemplified display of the graphical tool of FIG. 1 when carrying out a simulation;
- FIG. 5 illustrates a kinematics simulation of a modeled product displayed in the graphical user interface of FIG. 1;
- FIGS. 6A and 6B illustrate two simulations of a product, displayed in the graphical user interface of FIG. 1;
- FIG. 6C shows a display of a product ready for simulation, with immersed help-balloons for user-guidance;
- FIG. 7 is an exemplified graphical user interface display when displaying a lock/unlock status of various parts of a product;
- FIG. 8 is an exemplified graphical user interface display when displaying the modification status of parts;
- FIG. 9 is an exemplified graphical user interface display when displaying part names as product labels of various parts of a product;
- FIG. 10 is an exemplified graphical user interface display when displaying links status of various parts of a product;
- FIG. 11 illustrates a drag-and-drop operation of the graphical tool of FIG. 1 and subsequent display of various attributes or status of parts of a displayed product; and
- FIG. 12 is an exemplified web-like graphical user interface display with an embedded graphical tool, in an embodiment of the invention.

The invention proposes a product edition and simulation system, comprising a storage system having data related to modeled objects and a graphical user interface. The graphical user interface has an edition workbench comprising a plurality of software tools suitable for editing a subset of features of the modeled objects. The edition workbench is further adapted for displaying a user-interactive graphical tool in the graphical user interface. In addition, the graphical tool is adapted for triggering upon user action a simulation of a modeled object according to a feature not comprised in the subset. The simulation uses a result of a query in the storage system.

The edition and simulation system of the invention, for example a PLM database or a file system, thus allows for directly triggering various simulation of a modeled object (for example a product, a part, a resource, a process, etc.) during a design session. For instance, launching an operation simulation of an edited product does not require the cumbersome steps mentioned above, notably saving the data, activating a new workbench or a new application window for subsequent simulation launching. Efficiency of a design session is therefore improved in many respects. Further, using queries in a storage system allows for a consistent management of the data related to modeled objects. In addition, the user does not have to be skilled in the technical field, specific wording, techniques used by the simulation workbench in order to successfully perform the simulation. Thus, the user can focus on its task of design, which is readily carried out using a current workbench, wherefrom simulations can be launched whenever needed.

As an example, the forthcoming description mostly refers to the simulation of a product or product part, being understood that the invention further applies to processes or resources.

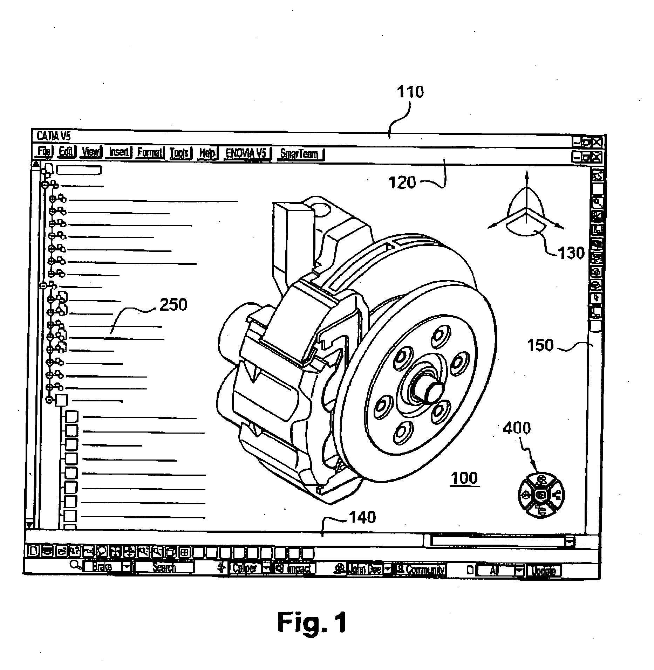

FIG. 1 is an exemplified graphical user interface display according to an embodiment of the invention.

In reference to FIG. 1, the exemplified graphical user interface (or GUI) 100 may be a typical CAD interface, having standard menu bars 110, 120, as well as bottom and side toolbars 140, 150. Such menu- and toolbars contain a set of user-selectable icons, each icon being associated with one or more operations or functions, as known in the art.

Some of these icons are associated with software tools, adapted for editing and/or representing a modeled product 200 or parts of product 200 such as that displayed in the GUI. The software tools in question are grouped in workbenches. Otherwise put, each workbench comprises a different subset of software tools. In particular, one of these is an edition workbench, suitable for editing geometrical features of the modeled product 200. In operation, a designer may for example pre-select a part of the object 200 and then initiate an operation (e.g. change the dimension, color, etc.) by selecting an appropriate icon. For example, typical CAD operations are the modeling of the punching or the folding of a 3D modeled object displayed on the screen.

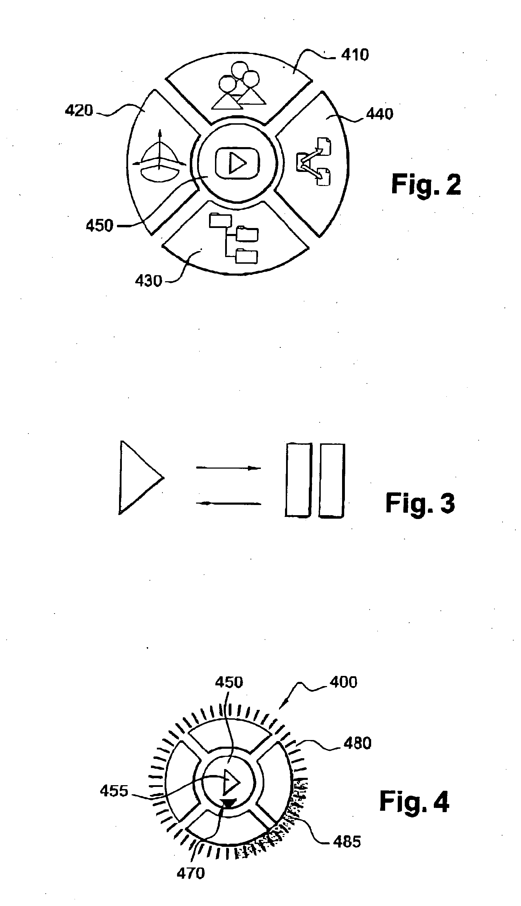

The edition workbench is further adapted for displaying a user-interactive graphical tool 400 within the graphical user interface 100. As will be described later, notably in reference to figure 2, graphical tool 400 is further adapted for triggering a simulation of a modeled object, such as a simulation of operation of said object.

The GUI may for example display data 250 (known as a feature tree) related to the displayed product 200. In the example of FIG. 1, the data 250 and 3D picture 200 pertain to a brake assembly including brake caliper and disc. Data 250 is displayed in the form of a tree, on the left-hand side of the GUI. The GUI may further show other type of graphic tool 130, for example for facilitating 3D orientation of the object.

As an example of embodiment, the product edition and simulation system of the invention is a PLM system equipped with a database, implemented in a computer network. Thus, the edition and simulation system according to the invention may hereafter be referred to as a PLM system. The GUI 100 is run on a computer having a display and memory and being further connected to the computer network, which may benefit from a product data manager (PDM) system. The PDM system allows for the management of numerous documents and data, possibly hierarchically interrelated. A plurality of users may thus work in a collaborative way, on different parts/products, using for example similar local applications and a common environment. For instance, GUIs similar to that identified by reference numeral 100 displayed in FIG. 1 may be run on other computers of the network.

FIG. 2 exhibits a display of graphical tool 400 of FIG. 1. As shown in FIG. 2, the graphical tool 400 may comprise user-interactive areas 410, 420, 430, 440, 450, which may for instance be activated by a simple mouse click or by any other pointing device. The areas of the graphical tool are preferably tagged with markers for easier identification and arranged so as to make the graphical tool intuitive and ergonomic. In the example of FIG. 2, the graphical tool has the general shape of a compass (areas arranged in quadrants), so that it will be hereafter denoted either by "compass" or "graphical tool" to mean the same thing. Though such a shape is preferred with respect to its handiness, various other shapes could be provided. Preferably, the compass of the system according to the invention is intended to be a user-friendly and intuitive tool, notably adapted for providing a temporary information (for example vanishing at next click), useful for guiding the designer through a design session.

The user-selectable areas may be dedicated to various types of functions, such as simulation , e.g. part/product, kinematics operation, life cycle, configurations, synchronization of parts, etc., and possibly the display of contextual and dynamic information (owner, lock/unlock status, modification status of edited parts, links status of parts/products, part names etc.), as will be explained later.

FIG. 3 illustrates schematically an example of a toggle operation of a user-interactive simulation area of the graphical tool of FIG. 2.

In order to improve the handiness and intuitiveness of the compass, user action on interactive areas may trigger tools or menus, like pop/pull-up/down submenus for improving the guidance of the designer. This is not exemplified in reference to figures 2 or 3, but figure 4 shows a marker area 470 which allows the user to pull-down a menu.

In the example of FIG. 3, clicking the "play" marker (initiating a simulation) of the simulation area 450 may instantaneously toggle to a "pause" marker (stop the simulation). Figure 3 shows at 455 the original icon displayed on the "play" marker 450 of figure 2. When this marker is activated by the user, it toggles to the "pause" marker displayed at 460 in figure 3. At the same time, the simulation is carried out, as discussed below. The user may interrupt the simulation by clicking again on the marker 450, and at this time, the simulation would be interrupted and the icon would toggle from icon 460 of figure 3 to icon 455 of figure 3.

FIG. 4 shows an exemplified display of the graphical tool of FIG. 1 when carrying out a simulation.

In the embodiment of FIG. 4, the compass 400 shows four main user-interactive areas or quadrants, dedicated to different types of attributes or information. The central area 450, dedicated to simulation, is tagged with both a "play" marker 455 and submenu marker 470, which may for instance give a user access to a pull-down/up menu, having selectable options allowing a user to refine the simulation features, for example select option related to kinematics, configuration, and life cycle simulation types. Notice that such options in the menu can be updated according to the selected object, the current workbench (defining the current action of the user), the last selected area, for example one of the areas 410 to 440. The compass further shows an endless scroll bar or cursor 480, surrounding the compass, user-selectable (for example from mouse pointer and/or click). Once the simulation has been launched, a color-coded range 485 might appear as to indicate the progress status (for example an elapsed time). Such a scroll bar may either be activated and displayed upon selection of the simulation area, for example by clicking "play" 455 on the central area 450 or be permanently attached to the compass 400. Alternatively, launching a simulation may pop up a more classical player, such as known multimedia players, having standard options like "play", "pause", "rewind", "forward", etc. An advantage of the endless scrollable bar is that it allows for endless backward/forward simulation, though the content itself is limited, which helps the designer in appreciating the simulation.

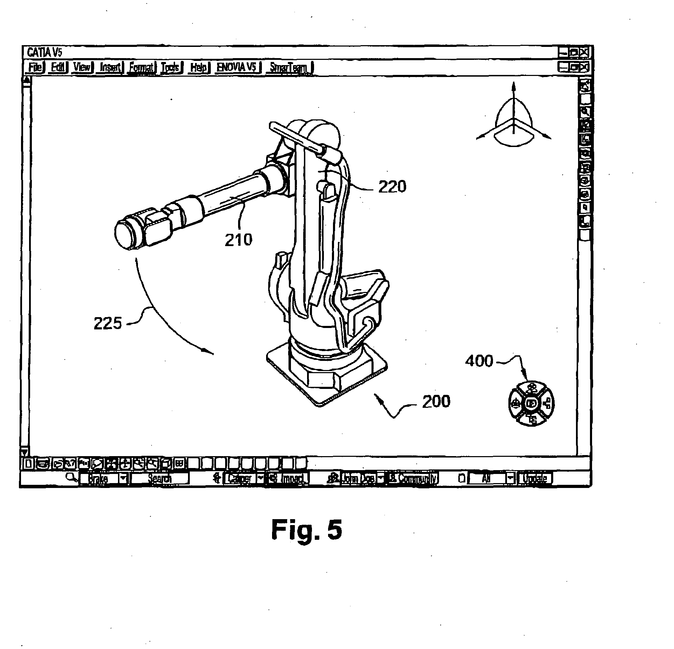

FIG. 5 illustrates a kinematics simulation of a modeled product displayed in the graphical user interface of FIG. 1.

In reference to FIG. 5, the GUI 100 has menu and toolbars 110, 120, 130, 140, 150, 300 similar to those of FIG. 1; the GUI further includes the compass 400. The GUI 100 displays a product 200, which is a modeled robot for automotive industry, comprising notably a first shaft 210, rotatably mounted on a second shaft 220.

After triggering the simulation, a player is launched, which allows for playing the simulation of an operation of the displayed object, such as the kinematics operation rendering of the rotation of the first shaft 210, as indicated by curved arrow 225 in FIG. 5. This is only one type of simulation which is available, as will appear below.

It is to be noted that while the edition workbench comprises software tools suitable for editing a subset of features of the modeled objects, the simulation triggered from the graphical tool uses one or more feature(s) not comprised in said subset. In other words, the simulation launched can be viewed as the display or animation of values of intrinsic features (e.g. those comprised in the above subset) according to extrinsic features (e.g. those not comprised in the above subset). The extrinsic features are not freely settable in edition workbench and are required for carrying out the simulation, regardless of the currently active object. These may for instance comprise a model and/or parameters used for the simulation. Making such extrinsic features independent of the edition workbench provides an improved handiness of the edition and simulation system.

Notice that, in an embodiment, the extrinsic features or, at least part of these, may be provided as part of the result returned upon query of the storage system, if necessary. The intrinsic features typically comprises geometric features of a product/part, the extrinsic features may typically encompass initial speed, gravitational field or initial current. Those intrinsic and extrinsic features define the state of the object, with its state variables. Thus, the simulations will be carried out on a certain state of the object (or "system"), that will change from a first state to a second state. The initial state of the object to be simulated may be modified according to the user-interactive areas 410, 420, 430, 440, 450 selected by the user as it will be seen below.

In order to trigger this simulation, a user may click the appropriate area 450, whereby a query in the PLM database is triggered, which returns a result necessary for carrying out the simulation. The result may for example comprise data or a data location identifier corresponding to simulation parameters such as the simulation player to be used, initial conditions, simulation or ergonomic constraints etc. Notice that such parameters could be stored and updated in the database, from which they are available for a quick launching of the simulation, so that little, possibly no parameterization is required. Notwithstanding, some of the parameters useful for the simulation could still be editable from a workbench, e.g. the edition workbench. Various set of parameters could also be made available from the result returned by the query in the database, comprising for instance defaults parameters, last parameters used etc., allowing a user to quickly re-parameterize the simulation features, possibly while the simulation is being carried out.

In a preferred embodiment, the PLM database system is configured so as to launch a default simulation player, according to the workbench used for the object editing. Hence, triggering the simulation automatically select an appropriate simulation player. The PLM database system is further preferably configured so as to allow for a specific play behavior if this latter is associated with the object selected for simulation.

At least some of the parameters required for carrying out the simulation may be comprised in or retrieved from the result returned after querying the database. Thus, triggering the simulation requires a minimum number of settings, possibly no setting at all, so that the simulation (for example a kinematics animation as in the example of FIG. 5) can start rapidly upon user action, if not immediately.

Notice that, beyond the simulation of operation of the edited object, it may also be possible to launch simulation of chemical/electrical/physical properties, such a finite element method modelling/analysis of a product or lighting simulation (parts displayed in given light conditions).

Advantageously, the user-interactive compass of the edition and simulation system according to the invention is adapted, upon user action, for triggering a simulation (this could be any simulation type, e.g. an operation simulation) of the modeled object before updating said storage system (for example a database) with the modeled objects that have been modified. This makes it possible to stress on the consequences of a change without requiring an update of the storage system, which is time and resources consuming. Once the simulation has been carried out, the user may decide whether to keep the changes or not. This operation can be repeated as much as needed, without requiring the cumbersome step of updating the storage system

For example, let us consider the brake system 200, including caliper, as displayed in the GUI 100 of FIG. 1. While editing the product thanks to the appropriate workbench or application, a designer may change brake pad dimensions. As a design link between the pad and the caliper exists, a change in the brake pad should impact the caliper. The triggered simulation of operation shows the changes to the various parts. Thus, it makes it possible to change a part (in a current session, without any update of the database) and render the various changes arising due to this change.

Advantageously, the user-interactive compass is further adapted, upon user action, for triggering a simulation of the update of the storage system with a currently edited part. The simulation of update of the storage system may display the various parts that still need be modified, whatever said parts are loaded or not in the current session of the user. This makes it possible to appreciate the consequences of a change on a more global scale (e.g. beyond the currently edited part) before an effective update of the storage system, which is time and resources consuming, as noted above. Furthermore, other types of simulations may be independently triggered from the compass, such as the simulation of product/part or resource configurations, life cycle (e.g. design iterations, versions), as will be explained below.

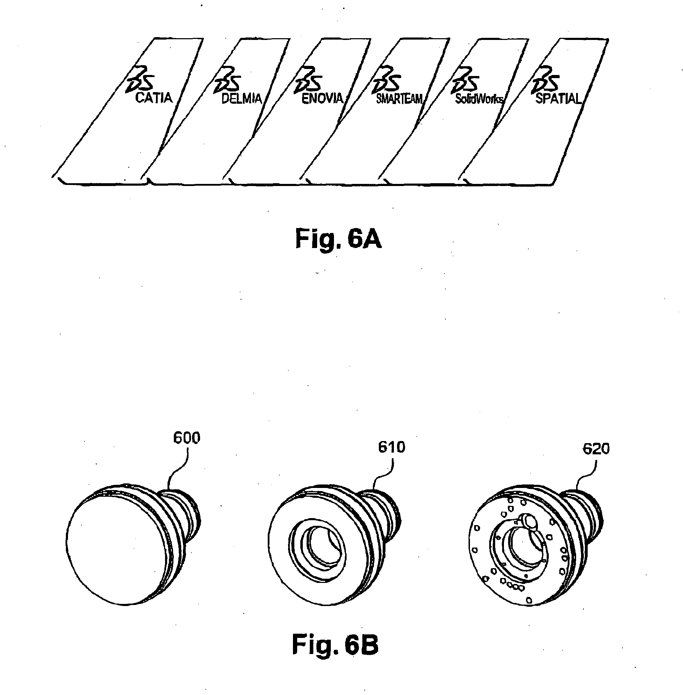

FIGS. 6A and 6B illustrate two different simulations of a product, displayed in the graphical user interface of FIG. 1

In the example of figure 6A, the GUI shows various configuration of the same product - in the example an airplane vertical tail. The figure shows six different configurations of the product, which correspond to different clients. The simulation over the various configurations of the product makes it possible for the designer to display all configuration of the same product. Practically, the edition workbench is adapted for allowing edition of configuration features of the edited product or part. Then, the user-interactive graphical tool may be adapted for triggering a simulation of the product or part, using the configuration features. Triggering the simulation will therefore allow a user to navigate among the various configurations, on the basis of the available configuration features. These configurations could be for example commercial configurations, e.g. including different colors and material available for the product, as exemplified in figure 6A. The configuration simulation can also provide the user with various seat configurations for a single airplane, for example depending on the "client" specifications. The "client" would in this case be considered as an extrinsic feature, according to the terminology used above. A first airline may whish to have nine seats in a row, while another would prefer six, and a third airline wants five, all those configurations for the same airplane.

It may further be given a user the possibility to navigate among various options or combination of options. For example, in a car, it could be possible to play the various set of configurations available (standard, sport, etc.) or the various design alternatives, possibly by taking into account configuration constraints (for example a sport-like steering wheel should not be used in a standard car). All these configuration features are located in the database of the system, associated to the relevant products or parts. When the user selects a simulation to be played (thanks to the user selectable area 450 for example), a query is sent to the database and a result is returned, allowing the simulation to be performed.

In the example of figure 6B the GUI 100 displays three subsequent versions of a product. The simulation shows the design iterations, i.e. the subsequent versions of the product, as they are modified over time. Reference 600 is the earliest version of the product; while reference 610 is an intermediate version of the product and reference 620 is a current version of the product. As shown in figure 6B, the various versions of the product are shown, which makes it for example possible to simulate the evolution of the product in its life cycle time. Time would thus be considered as an extrinsic feature used for the versioning simulation. Notice that versioning simulation could also use other extrinsic features such as the type of manufacturing process.

Thus, in addition to the operation and configuration simulations, as described above in reference to figures 5 and 6A, it is possible to play a simulation of the product lifecycle time, that is, to play the various versions of the product (or part), the maturity level of each design iterations, the various milestones of a same product, etc, and this from an unique tool 400. For this, the edition workbench could be made suitable for allowing edition of product lifecycle features of the modeled object while the compass would allow for triggering a simulation of said modeled object, using the above product lifecycle features.

This makes it possible to render the evolution in time of an object from the early stages to all the gates. In particular, it could then be possible to come back on a state of the design of a product or a part on a particular day/date, which allows users to view how said product or part evolved. In this mode, the compass may display, for each selected modeled object and upon user action, the various versions/revisions available, allowing thus a quick understanding of the product lifecycle. As for the configuration simulation, the necessary life cycle features are located in the database of the system, associated to the relevant products or parts. When the user selects a particular simulation, a query is sent to the database and a result is returned, allowing for performing the simulation.

Another possible type of simulation is the simulation of the synchronization of co-designed parts, displayed in the graphical user interface of FIG. 1.

In a preferred embodiment, the PLM database system of the invention is configured so as to allow users to co-design parts of product from various computers of the network, using for example similar CAD/CAM/CAE user interfaces and a common environment. A first user is for example designing a first product part 210 while a second user, in a second session opened on the second user's computer, is working on a second part 220 of the same product.

The user-interactive compass 400 may be adapted for triggering, for example upon action by the first user, a simulation of the edited product 200 comprising the first product part 210 edited by the first user in a current session and the second product part 220 edited by the second user in the second session. Said simulation of the synchronization status of the product will preferably inform the first user that the second part 220 was modified too.

Regarding such a simulation type, distinction should be made between the data associated to the edited part of the first user and that associated to the second part of the second users, as these are not processed the same way. The first data should be regarded as intrinsic data, for example editable from the edition workbench, while the second data are preferably processed as extrinsic data. The second (extrinsic) data are further provided as part of the result returned upon query of the storage system (e.g. a database).

Advantageously, the various parts of the product are color-coded with one color per user during the simulation. Any other type of identification may be used. This facilitates the understanding of the status by the user who triggered the synchronization simulation. When triggering the simulation, a query is sent to the database upon user action on the relevant area of the compass and the result is given on the display.

As a result, the first user is able to view an assembly of parts comprising his own part (e.g. the first one being currently edited) together with one or more other parts, edited by other users. Again, the simulation could preferably be carried out before updating the database with the edited first part, so that no update in the database with the currently edited part is required. In view of the result of the simulation, the first user may afterwards decide whether he should update the database or not.

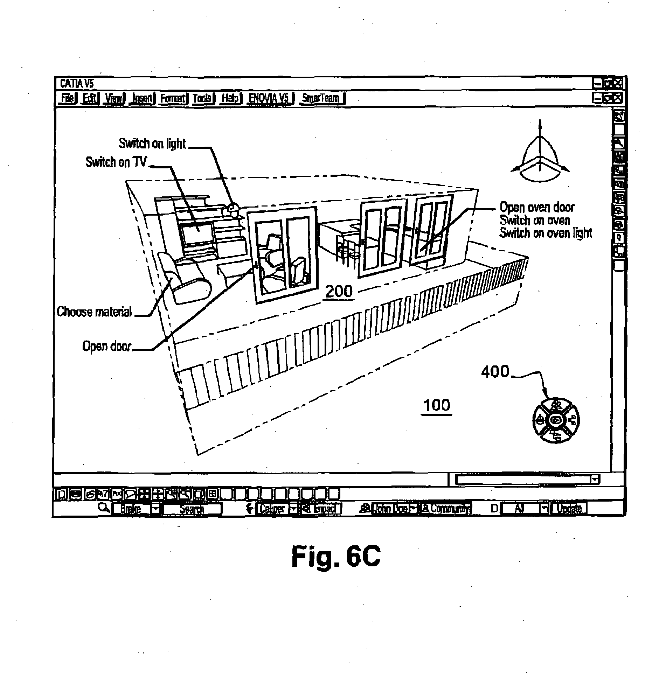

Next, as regards various possible simulations available to the user: this latter may be invited to proceed to these various simulations thank to help-balloons, as illustrated in FIG. 6C. FIG. 6C shows a perspective view of a flat 200, which can be seen as a complex product composed of many parts, such as a T.V. set, sofa, lights, doors, and so on. This complex product, as represented, is ready for simulation. In an embodiment, after loading the product in the GUI 100, the product edition and simulation system is adapted for displaying help-balloons for guiding a user through various possible available simulations. The available simulations may for example comprise switching a light, T.V., oven, oven light on, choosing a material for the sofa or open a door, etc., as represented in FIG. 6C.

Notice that simulating primarily a first object (for example switching the light on) may impact on other objects (here other parts are enlightened), so that simulation triggered from the graphical tool uses one or more feature(s) not necessarily comprised in the editable subset of features of the modeled objects, as seen above. Again, the simulation launched can be viewed as the display or animation of values of intrinsic features (e.g. those comprised in the above subset) according to extrinsic features (e.g. the state variables not comprised in the above subset, such as light reflectivity in the example of FIG. 6C). To this end, multiple queries in the storage system might be necessary.

Next, in an embodiment of the invention, the product edition and simulation system provides a compass adapted for displaying, upon user action, representation of one or more parts of the product, or one or more steps of a process, with respective attributes or other life cycle information contained in the database. These attributes are further updated in the database by the PLM system, for example after an update operation from one or more of the users, so as to allow up-to-date information to be available for users.

To this respect, it may advantageously be provided a PLM database containing modeled objects and relations between said modeled objects. In the database, the modeled objects are associated to a set of values of attributes, which values are preferably stored in the database, else computable based on relations involving said modeled objects. The PLM database may further comprise respective means for:
- displaying to the user a view of a set of modeled objects;
- receiving a selection by a user of an attribute;
- querying the database for a modeled object to be rendered;
- providing a value of the selected attribute, associated to said modeled object; and
- rendering said modeled object in the view according to the provided value of the attribute.

It may also be possible for the user to select a value of an attribute and the rendering will be carried out only on the object, whose value(s) matches with the selected value.

The above steps allow for a direct rendering of a given modeled object during a design session, e.g. the user does not have to launch a dedicated application. It is thus possible for the user to select the attribute or a value thererof, possibly among various available attributes or values thererof. The rendering information is stored outside the geometrical model data of the modeled objects (within the set of values of attributes). In addition, using queries in a PLM database allows for a consistent management of the data related to modeled objects.

Notice that "attribute" merely means a type of parameter or variable according to which the rendering process can generally be carried out. However, the rendering step itself makes use of one or more values of attributes. In this respect: "displaying an attribute" means hereafter that a representation of one or more values of this attributes is effectively displayed, unless otherwise mentioned.

Besides, the concept of "rendering" needs be commented on here, in relation to the field of PLM. The result of a "rendering" step denotes an alternate visualization of one or several objects, according to one or several attributes related to this or these object(s), or according to one or several attribute values related to this or these object(s). Though the rendering step may depend on the value of the attribute, the result itself does not depend on this value. Rather, the PLM rendering further depends on PLM Rendering specifications (which may be hardcoded or user-defined). Accordingly, the rendering (in the sense given here) implies an appropriate reorganization of the database, in comparison with the existing CAD-like solutions, where parameters are somehow rigidly bound to the objects. As an example, one can imagine an implementation for which a red part could be rendered as blue.

The user is required to select an attribute and above steps further comprise providing a value of the selected attribute, associated to a modeled object to be rendered. As a result, the progression of the user is made easier thanks to the fact that the latter does not have to first input a value of the attribute, which is not necessarily known by the user. Instead, the user takes note of the value of the attribute thank to the query in the data.

The value of attribute is further preferably stored in the database instead of being computable from relations involving the stored objects. Thus, retrieving the value is made faster as no computation is necessary.

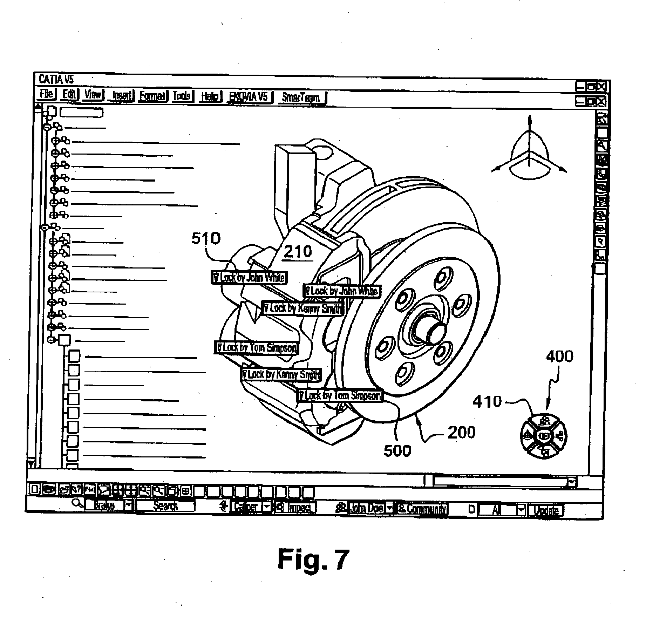

As an example, FIG. 7 is an exemplified graphical user interface display when displaying a lock/unlock status of various parts of a displayed product.

In this case, the attributes of the part 500 displayed in the GUI 100 relate to an owner lock/unlock status. For example, a part is locked when the owner of that part is not willing to authorize other users to edit and modify that part.

To achieve this, the user may for example select the appropriate interactive area of the compass, that is, the north quadrant 410 in the example of FIG. 7 - let us call this quadrant the "people" quadrant, for the sake of simplicity. After selection of this quadrant, a lock/unlock status appears next to the corresponding part, preferably together with the part owner name and/or owner picture and the part name. To that end, a query is sent to the database in order to retrieve the lock/unlock status of the part(s).

A color-code could further be applied to the 3D representations of the different parts, upon user selection of the "people" quadrant, which makes the overview easier. For example, a red coloring would stand for "locked by another user", a green coloring would mean "locked by the user himself" and a white coloring would apply when the corresponding part is not locked.

In a further embodiment, it could be possible to first select a part 210 displayed in the GUI and then select the quadrant of the compass in order to trigger a display of attributes associated with the selected part only. Instead of displaying all tags of figure 7, the user would only see tag or label 510 associated to the previously selected part 210.

For a single part, there may be provided at least three types of representation: one is related to the reference of the part, one is related to the instance and another one is related to the 3D representation itself of the part. The edition and simulation system of the invention may advantageously be configured to display the attributes of all the types of representation of a part, one at a time or together.

Notice that, in an alternate embodiment, using the attribute display functions, for example triggered from the compass quadrants, may allow for an interaction with the simulation functions described above. Namely, requiring first the display of an attribute may automatically select options for an eventual subsequent simulation. For instance, when the user selects the "people" quadrant, the object is placed in a certain state, ready for a simulation based on the state variables (or extrinsic features) defined thanks to this quadrant. If the user selects another quadrant 420, 430, 440, 450, the initial state of the system defined by the state variables will be different and the type of simulation will also be different. For example, if the modeled object is a car, and if the "people" quadrant is selected, one of the available simulations may be an ergonomic simulation, placing a manikin in the car in order to check the accessibility to the car. When selecting the "people" quadrant, the car is placed in a certain initial state where the extrinsic features (state variables) would be the presence of manikin, its height, weight, position...

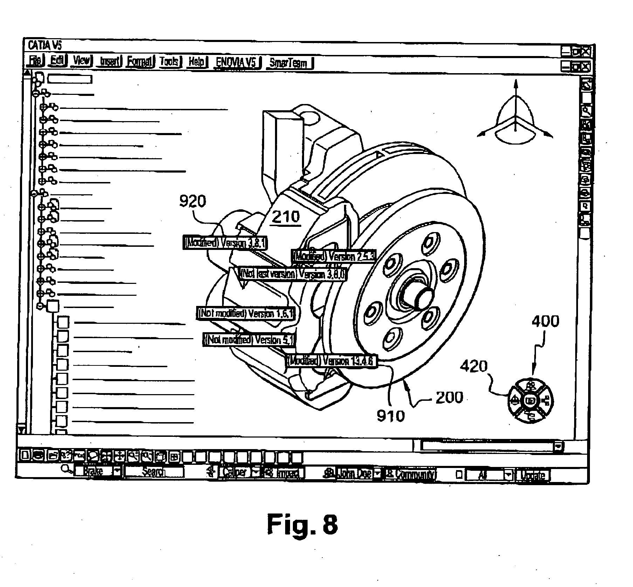

FIG. 8 is an exemplified graphical user interface display when displaying to the user the modification status of the parts loaded in the session.

In reference to FIG. 8, the user-interactive compass 400 is adapted, upon user action, for displaying the modification status of the product or product parts 200, along with the name of said product or parts. This can be attained by clicking on the appropriate compass quadrant, that is, the West (or "form") quadrant 420 in tool 400 exemplified in FIG. 8.

The user-interactive graphical tool or compass 400 is adapted for displaying, possibly using a color coding and upon action of a user, one or more of the following:
- identification of parts modified by the user in a current session;
- identification of parts able to be modified by the user;
- identification of parts that can not be modified by the user in the current session; and
This information is related to the current session only. Nevertheless, the database is queried when the user selects the relevant quadrant.

In the example of figure 8, the GUI displays to the user a series of tags or labels 910 showing the various modification status and qualifiers for the various parts of the product. In addition, said modification can be related to the shape of the part, to the positioning of the part, to the reference itself instead of the instance. As explained in reference to figure 8, one may also pre-select one part 210 of the product and then select the appropriate area 420 of tool 400, which would result in the tags 920 for the pre-selected product being displayed.

Notice that selecting the "form" quadrant could place the modeled object in a certain state allowing the user to perform simulations related to said quadrant, in the embodiment depicted above.

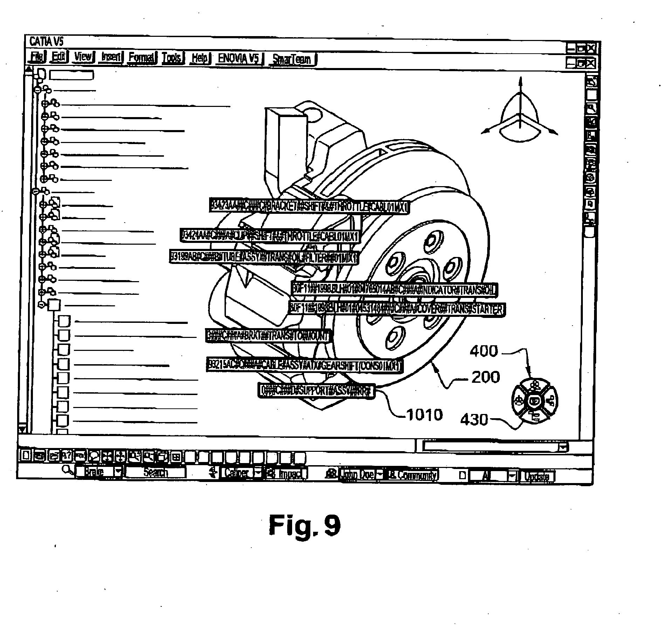

FIG. 9 is an exemplified graphical user interface display when displaying part names as product labels of various parts of a product, in an embodiment of the invention.

In reference to FIG. 9, the product lifecycle database system according to the invention provides a compass adapted for displaying, upon action of a user, representation of one or more of the following attributes 500:
- representation of a name of a part, the name belonging to the attributes of the part;
- representation of a maturity level of a part according to criteria comprised in the attributes of the part;
- representation of a version identifier of the part, the version identifier belonging to the attributes of the part; and
- representation of an effectivity identifier, used by the configuration definition.

The effectivity identifier is a Boolean evaluation (right/false) of a formula based on one or more parameters, comprising for instance a rank, date or option. For example, if a user wishes to load from a database a specified airplane of rank 3, dated from 2001 with a single-class layout, the system will search and evaluate among the data a product having an effectivity corresponding to those parameters (rank 3, 2001, single-class layout) in order to provide the user with the selected airplane configuration. In other words, the effectivity is an attribute of a product or a part enabling to check if said product or part matches a specific configuration.

Thus, thanks to the tool 400 of the invention, the effectivity of a selected product or part according to a parameter can be displayed to the user.

Again, this can be achieved by clicking on the appropriate compass quadrant, that is, the South (or "fit") quadrant 430 of tool 400 in FIG. 9, the selection triggering a query in the storage system in order to retrieve and return the appropriate attributes.

Notice that the representation of maturity of part may be envisaged according to various criteria (typically, % or scale, e.g. from specification, design, first to third level of acceptation, production validation, etc.). The maturity level might further be updated by the user himself during development of parts, possibly in a semi- or full automatic way. Further, the maturity could be color-coded. For example, the 3D representations of the parts may have different colors according to their maturity or their version. As explained in reference to figures 7 and 8, one could here again pre-select one part or several parts in order to limit the display to the information for the relevant part or parts.

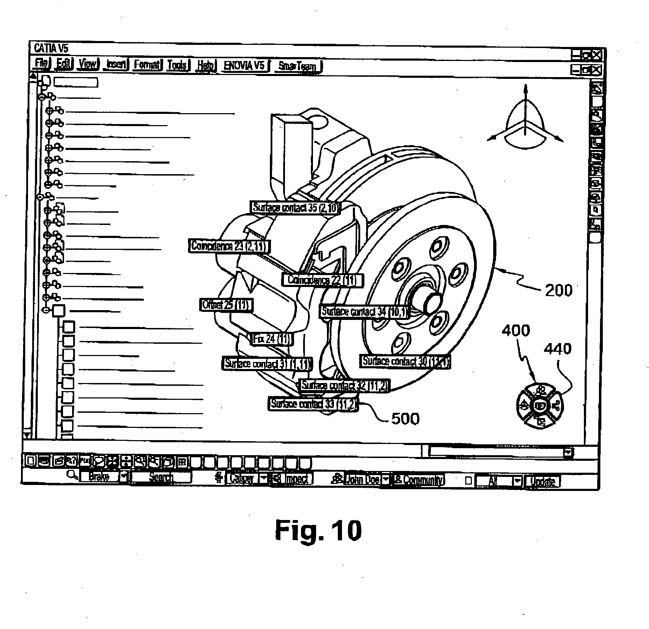

FIG. 10 is an exemplified graphical user interface display when displaying links status between various parts of a product, in an embodiment of the invention.

In reference to FIG. 10, the product lifecycle database system according to the invention provides a graphical tool 400 adapted for displaying, upon action of a user, representation of a link status 500 between a first part and other parts, loaded in the session or not, along with the name of the selected part. This is achieved by clicking on the appropriate compass quadrant, that is, the East (or "function") quadrant or area 440 of tool 400. It is thus given the user the possibility to quickly see the links status and especially the synchronization status of the selected parts with respect to parts that impact the selected ones, even if not loaded. As before, one may pre-select one or several parts. Different status may be represented:
- links synchronized with parts loaded in the working environment
- links synchronized with parts not loaded in the working environment
- links not synchronized with parts loaded in the working environment
- links not synchronized with parts not loaded in the working environment
- inconsistent links

In addition, the user-interactive compass is adapted for displaying an update/non-update status of the link when said link is pointing at another part of the session. All those statuses are retrieved from the database, said database being queried when the user activates the relevant quadrant.

For example, in the case of the brake system 200 with caliper 210, a link to the supporting suspension might be displayed upon user action. When the brake caliper 210 is modified, since there are links to other products/parts, an update of other products/parts will be necessary. The "function" button may therefore indicate if the links are:
- updated, in which case the linked products/parts are modified in consistency with the current modifications of the caliper 210;
- not updated, that is, the linked products/parts are not modified in consistency with the current modifications of the caliper; or
- inconsistent links: e.g. the linked product /part does not exist in the database.

Notice that, here again, the above states may be color-coded. Further, since links are directional; in the examples given above, one assumes the links are from the currently active product/part towards the other ones.

Conversely, the display of link may also indicate when the currently active product/part is pointed at by links. In another embodiment, the product lifecycle database system provides, through the GUI, a user-interactive compass as a drag-and-drop tool, which allows for triggering a display of attributes and information on an object upon dragging the graphical tool up to and dropping it at a location corresponding to the particular object.

As seen above, the state of the system (defined by the selected object and state variables) may be defined by the active quadrant. If the user selects another quadrant, the state variables are modified and thus the state of the system is also changed. Therefore, the available simulations are also different.

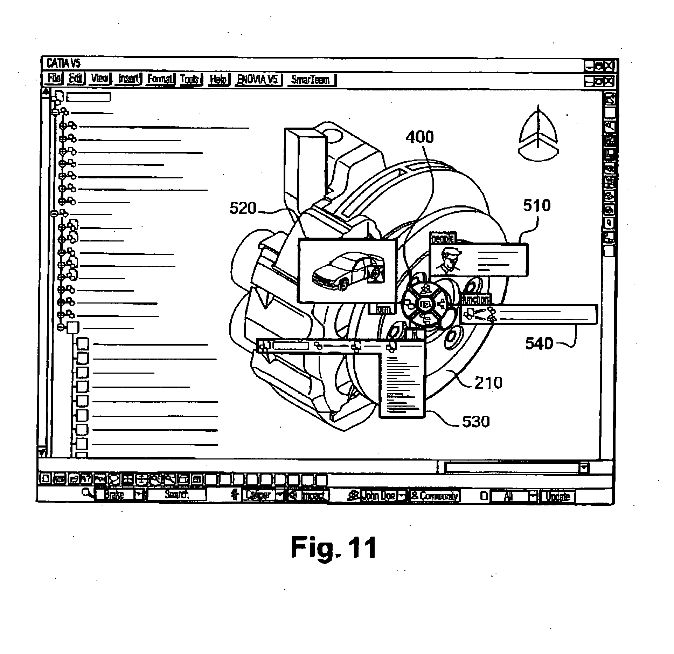

FIG. 11 illustrates a drag-and-drop operation of the graphical tool of FIG. 1 and subsequent display of various attributes or information of parts of a displayed product, such as described in reference to FIGS. 7 -10. The compass is dragged by the user and dropped at a desired location, corresponding to a particular part. For example, the user may click a mouse button when the mouse pointer points on the compass, hold the mouse button pressed, drag the compass by moving the mouse and drop the compass when releasing the mouse button. Once dropped at the desired location, a set of queries is triggered whereby a set of attributes or information 510, 520, 530, 540, associated with the part, appears next to the compass, close to the relevant quadrant. The general style of display for the set of attributes could for instance be as close as possible to that used when triggering queries such as described in reference to FIGS. 7 -10.

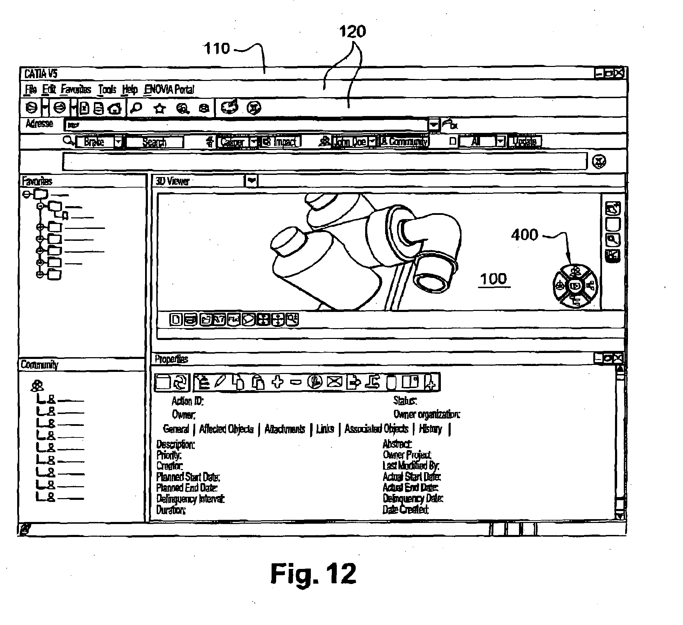

FIG. 12 is an exemplified web-like graphical user interface display (such as the one of ENOVIA LCA NAV 3dcom from Dassault Systemes) with an embedded graphical tool, in an embodiment of the invention. The GUI 100 is somewhat different in this case, compared to that of FIG. 1. Several graphical tool 130, including the compass 400 may still be immersed in a product display or rendering window. The GUI 100 further comprises a standard menu bar 110, supplemented with a web-like command bar 120. The functions of the compass 400 described in reference to FIGS. 7-10 can also be carried out in such a web-like environment.

Thus, according to the invention, a single graphical tool immersed in an edition workbench or an authoring window of a design application enables the user to query a database in order to launch and play all types of simulation associated with the object on which he is working on. Such a tool prevent the user from having to multiply the active windows or applications during his design session and improve the efficiency of his work since he is able to check immediately the validity of each iteration of his design through the various simulations.

In a preferred embodiment, the graphical tool has a proactive behaviour in order to propose options to the user. For example, if a second user modifies a part that is loaded in the first user session, the tool would trigger a warning for example by way of a pop-up menu or a modification of the relevant quadrant. In this case, the West (Form) quadrant will be highlighted, its color will be changed or it will blink to draw the attention of the first user who will then select said quadrant. That proactive behavior will advantageously be applied to all the quadrants in order to improve the guiding of the user.

Notice that although the storage system has been mainly described here above as a PLM database, the storage system may, in an alternate embodiment, simply consist of a file system, which may be sufficient for work on a single computer.

## Claims

1. A product edition and simulation system, comprising:
- a storage system having data related to modeled objects;
- a graphical user interface, having an edition workbench comprising a plurality of software tools suitable for editing a subset of features of the modeled obj ects;
wherein:
the edition workbench is adapted for displaying a user-interactive graphical tool in the graphical user interface, the graphical tool being adapted for triggering upon user action a simulation of a modeled object according to a feature not comprised in the subset, the simulation using a result of a query in the storage system.

2. The product edition and simulation system of claim 1, wherein the graphical tool is adapted, upon user action, for triggering a simulation of the modeled object before updating the storage system with the modeled object.

3. The product edition and simulation system of claim 1 or 2, wherein the user-interactive graphical tool is adapted for triggering a simulation of the operation of the modeled object.

4. The product edition and simulation system of any one of claims 1 to 3, wherein the user-interactive graphical tool is adapted for triggering a simulation of the modeled object according to product lifecycle features.

5. The product edition and simulation system of claim 4, wherein the product lifecycle features comprise the design iterations and the maturity level of the modeled object.

6. The product edition and simulation system of any one of claims 1 to 5, wherein the user-interactive graphical tool is adapted for triggering a simulation of the modeled object, according to configuration features.

7. The product edition and simulation system of any one of claims 1 to 6, wherein the user-interactive graphical tool is adapted for triggering a simulation of the modeled object, according to electrical, chemical or physical properties.

8. The product edition and simulation system of any one of claims 1 to 7, further comprising a network of computers, the network of computers and storage system being configured so as to allow users for co-editing modeled objects from any one of the computers.

9. The product edition and simulation system of any one of claims 1 to 8, wherein modeled objects comprise products, product parts, assemblies, resources, processes.

10. The product edition and simulation system of claim 8, wherein the modeled object is a product and wherein the user-interactive graphical tool is adapted for triggering a simulation of the synchronization status of the edited product comprising a first product part edited by a first user and a second product part edited by a second user.

11. The product edition and simulation system of any one of claims 1 to 10, wherein the user-interactive graphical tool is adapted for displaying, upon user action, attributes of a modeled object contained in the storage system.

12. The product edition and simulation system of claim 11, wherein the user-interactive graphical tool is adapted for displaying a representation of one or more objects with respective attributes according to a color code.

13. The product edition and simulation system of claim 11 or 12, wherein the attributes of the object relate to a lock/unlock status.

14. The product edition and simulation system of claim 13, wherein the lock/unlock status comprise lock/unlock status of a reference of the object, lock/unlock status of an instance of the object and/or lock/unlock status of a three dimensional representation of the object.

15. The product edition and simulation system of any one of claims 11 to 14, wherein the user-interactive graphical tool is adapted, upon user action, for displaying the modification status of an object.

16. The product edition and simulation system of claim 15, wherein displaying the modification status comprises, one or more of the followings:
- identification of objects modified by the user in a current session of the user;
- identification of objects able to be modified by the user;
- identification of objects that cannot be modified by the user in the current session.

17. The product edition and simulation system of any one of claims 11 to 16, wherein the user-interactive graphical tool is adapted for displaying, upon action of a user, representation of one or more of the followings:
- representation of a name of an object, the name belonging to the attributes of the object ;
- representation of a maturity level of an object according to criteria comprised in the attributes of the object;
- representation of a version identifier of an object, the version identifier belonging to the attributes of the object;.
- representation of an effectivity identifier of an object, the effectivity identifier belonging to the attributes of the object.

18. The product edition and simulation system of any one of claims 11 to 17, wherein the user-interactive graphical tool is adapted for displaying, upon action of a user, representation of the status of the links pointing at and pointing from parts of an object.

19. The product edition and simulation system of claim 18, wherein the status of the links comprises an update/non-update status.

20. The product edition and simulation system of any one of claims 11 to 19, wherein:
- said user-interactive graphical tool is a drag or a drag-and-drop tool; and
- the graphical tool is adapted for both selecting a specific object and displaying the attributes of this object upon dragging the graphical tool up to or dragging and dropping the graphical tool up to a location corresponding to this object.

21. The product edition and simulation system of any one of claims 1 to 20, wherein the graphical tool is adapted for triggering a simulation of an object upon first selecting the object and then an interactive area of the graphical tool responsive to user selection.

22. The product edition and simulation system of any one of claims 1 to 21, wherein the graphical tool is adapted for displaying the attributes of an object upon first selecting the object and then an interactive area of the graphical tool responsive to user selection.

23. The product edition and simulation system of any one of claims 11 to 22, wherein selection of an attribute modifies the feature not comprised in the subset.

24. The product edition and simulation system of any one of claims 1 to 23, wherein the graphical tool is adapted for displaying, upon user selection, an endless scroll bar suitable for simulation control.
